# EUROPEAN PATENT APPLICATION

(11) **EP 0 812 885 A2**
(43) Date of publication of application: **17.12.1997**
(21) Application number: 97202333.7
(22) Date of filing: 27.11.1990
(51) Int. Cl.: C08L 79/08, C08L 67/02, C08L 67/03

(54) **Polyimide based resin composition**

(30) Priority: 30.11.1989 JP 309100/89; 05.12.1989 JP 314394/89; 30.07.1990 JP 199058/90
(62) Divisional of application: 94202755.8
(71) Applicant: MITSUI TOATSU CHEMICALS, Inc., Chiyoda-Ku Tokyo 100 (JP)
(72) Inventor: Tsutsumi, Toshihiko, Yokohama-Shi, Kanagawa-Ken, 244 (JP); Nakakura, Toshiyuki, Yokohama-Shi, Kanagawa-Ken, 247 (JP); Morikawa, Shuichi, Hakone-Machi, Kanagawa-Ken 250-03 (JP); Shimamura, Katunori, Kanagawa-Ken, 250-01 (JP); Takahashi, Toshiaki, Hatano-Shi, Kanagawa-Ken 257 (JP); Morita, Atsushi, Yokohama-Shi, Kanagawa-Ken 244 (JP); Koga, Nobuhito, Kanagawa-Ken 247 (JP); Yamaguchi, Akihiro, Kamakura-Shi, Kanagawa-Ken, 248 (JP); Ohta, Masahiro, Ohmuta-Shi, Fukuoka-Ken, 836 (JP)
(74) Representative: Rackham, Anthony Charles

(57) **Abstract**

A molding resin composition comprising 99.9 to 50 % by weight of polyimide represented by the formula: 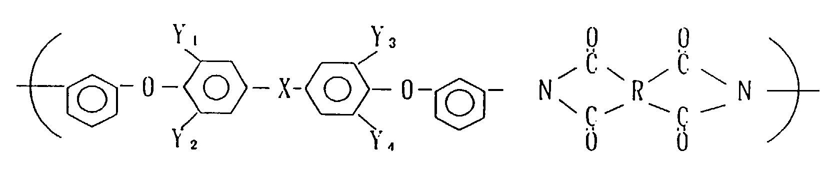 and 0.1 to 50 % by weight of polyether ketone resin and/or polyester resin, and more particularly comprising the polyester resin capable of forming an anisotropical molten phase at a temperature of 420 °C or less.

## Description

The present invention relates to a molding resin composition which comprises polyimide resin as a principal component. More particularly, the invention relates to a polyimide-based molding resin composition which comprises polyimide resin and polyether ketone resin and/or polyester resin and is excellent in thermal resistance, chemical resistance, mechanical strength and processability.

Conventionally, polyimide has extremely outstanding thermal resistance, is excellent in mechanical strength and dimensional stability, and additionally has flame retardance and electrical insulation property. Polyimide has hence been used in areas such as electrical and electronic parts, space and aeronautic members, and transportation equipment. In the future, it is expected that the use of polyimide will be extended to areas where thermal resistance is required. Various kinds of polyimide which exhibit excellent properties have been developed.

Although polyimide is excellent in thermal resistance, means such as sinter molding is generally required in the case of using polyimide as a molding material. Even though polyimide is thermoplastic and melt-moldable, processing under high temperature and high pressure is required in many cases. When polyimide is processed under such high temperature and pressure, polyimide is, though excellent in thermal resistance, thermally deteriorated or oxidized which decreases mechanical strength and which makes molding of thin-walled articles difficult.

Some kinds of polyimide have slow rates of crystallization in the processing stage and molded articles can be obtained in an amorphous state. Even though heat treatment is carried out in order to enhance the crystallinity of such polyimides, dimensional changes resulting from crystallization have led severe restrictions on the application of such polyimides to areas such as precision parts.

On the other hand, when processability is improved, the polyimide has a lowered glass transition temperature and is soluble in halogenated hydrocarbons. That is, the polyimide has decreased performance in view of thermal and solvent resistances. Consequently, conventionally proposed polyimides have both merits and drawbacks, and, it has been desired to accomplish further improvement.

The present inventors have also found a novel polyimide resin having recurring units represented by the formula ( 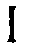 ): 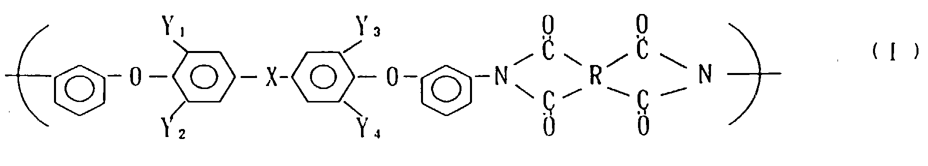 wherein X is a direct bond, divalent hydrocarbon having from 1 to 10 carbon atoms, hexafluorinated isopropylidene, carbonyl, thio or sulfonyl; Y₁, Y₂, Y₃ and Y₄ are individually hydrogen, lower alkyl, lower alkoxy, chlorine or bromine; R is a tetravalent radical selected from an aliphatic having 2 or more carbon atoms, alicyclic, monocyclicaromatic or fused polycyclic aromatic radical or a polycyclic aromatic radical connected to each other through a direct bond or a bridge member [Japanese Laid-Open Patent SHO 61-143478(1986), 62-68817(1987), 62-86021(1987), 62-235381(1987) and 63-128025(1988)].

The polyimide resin thus found is a novel thermal-resistant resin having various favorable properties such as excellent mechanical strength, thermal property, electrical property and solvent resistance in addition to its essential thermal resistance.

The polyimide resin is excellent in thermal resistance, mechanical strength and electrical properties as compared with conventional engineering plastics represented by polyethylene terephthalate, polybutylene terephthalate, polyether sulfone, polysulfone and polyphenylene sulfide. Consequently, the polyimide resin having improved processability in addition to its substantially outstanding chracteristics can be expected to be use in fields where conventional engineering plastics are not satisfactory.

One object of the present invention is to provide a polyimide-based molding resin composition having excellent flowability in a molten state in addition to its substantially outstanding characteristics.

Another object of the present invention is to provide a polyimide-based resin composition having an increased rate of crystallization and an improved dimensional stability of molded articles in a heat-treatment step.

As a result of an intensive investigation in order to accomplish these objects, the present inventors have found that a polyimide-based composition comprising the novel polyimide and polyether ketone resin and/or polyester resin is particularly effective for achieving the above objects. Thus the present invention has been completed.

One aspect of the present invention is a resin composition comprising from 99.9 to 50 % by weight of a polyimide having recurring units represented by the formula ( 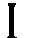 ): 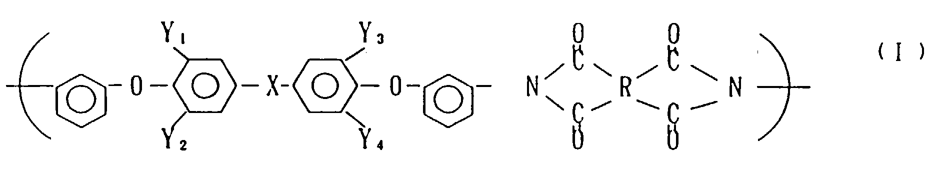 wherein X, Y₁ Y₂, Y₃, Y₄ and R are the same as above, preferably represented by the formula ( 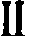 ): 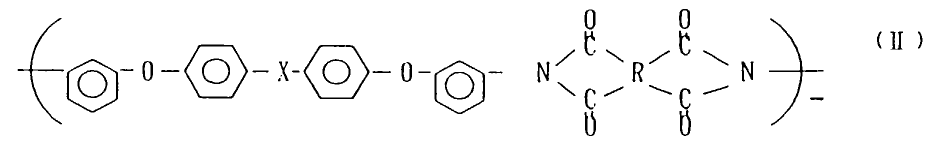 wherein X and R are the same as above, and from 0.1 to 50 % by weight of a polyether ketone resin and/or a polyester resin.

In the resin composition of the present invention, the polyether ketone resin is preferably represented by the formula ( 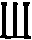 ):

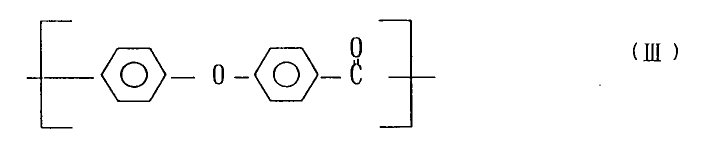

Further, in the resin composition of the present invention, the polyester resin has preferably recurring structural units represented by the formula ( 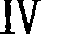 ): 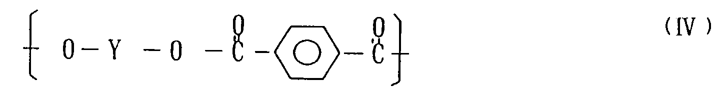 wherein Y is an aliphatic radical having from 1 to 4 carbon atoms or a radical represented by 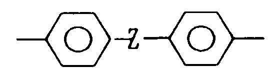 wherein Z is a direct bond, -C(CH₃)₂, -SO₂-, -CH₂-, -O-, -CO- , 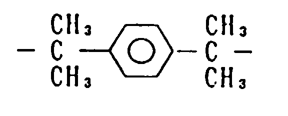 ; the polyester resin can more preferably form an anisotropic molten phase at a temperature of 420°C or less; and the polyester rain is most preferably a thermotropic liquid-crystal polymer obtained by conducting polymerization so that the polyester bond is formed by basic structural units of the formulas ( 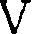 ), ( 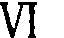 ) and ( 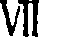 ):

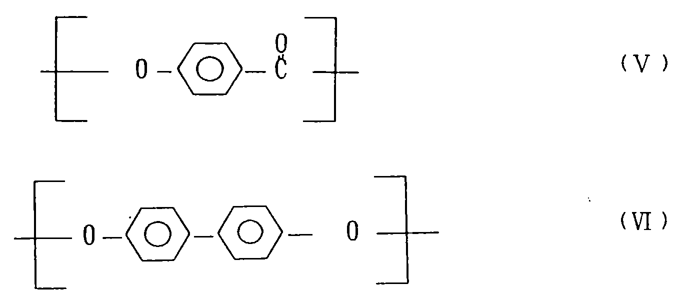

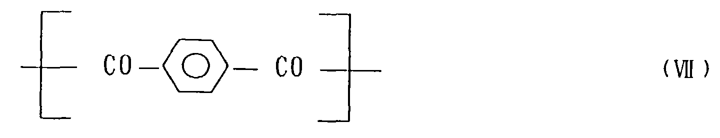

The resin composition of the present invention has remarkably improved processability and enhanced dimensional stability of molded articles upon heat treatment (annealing) step without impairing the excellent characteristics of the polyimide resin.

By blending a polyester capable of forming an anisotropic molten phase, the rate of crystallization is remarkably accelerated and the polyimide resin based composition can shift its exothermic temperature (Tc₁) of crystallization to the lower temperature side in a temperature-rise step.

### Description of the Preferred Embodiments

The polyimide used in the present invention is represented by the above formula ( 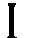 ).

The polyimide can be prepared by reacting an ether diamine represented by the formula ( 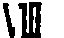 ): 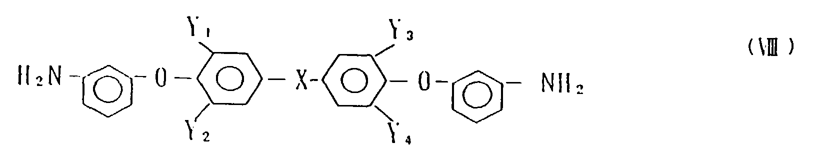 wherein X, Y₁, Y₂, Y₃ and Y₄ are the same as above, preferably an ether diamine represented by the formula ( 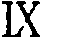 ): 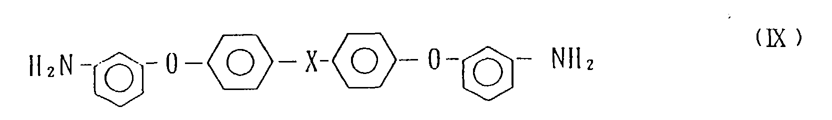 wherein X is the same as above, with one or more tetracarboxlic dianhydrides.

That is, the polyimide can be prepared by reacting the ether diamine with the tetracarboxlic dianhydride in a solvent and then thermally or chemically imidizing the resultant polyamic acid.

The reaction temperature is usually 250 °C or less. No particular restriction is imposed upon the reaction pressure. The reaction can be satisfactorily carried out under atmospheric pressure.

The reaction time varies depending upon the tetracarboxylic dianhydride used, the kind of solvent, and the reaction temperature.

The reaction is usually carried out for a time sufficient to complete formation of the polyamic acid intermediate. Sufficient reaction times are 24 hours or less, an hour or less in some cases.

The above reaction provides the polyamic acid corresponding to the recurring structural units of the formula ( 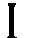 ). The polyamic acid is successively heat-dehydrated at 100 to 400 °C or chemically imidized by using a common imidizing agent to obtain the polyimide having recurring structural units of the formula ( 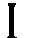 ).

Polyimide can also be prepared by simultaneously conducting polyamic acid formation and the heat-imidizing reaction.

The diamine compound for use in the preparation of the above polyimide which is used for the principal component in the composition of the present invention is represented by the above formula ( 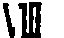 ).

Exemplary diamine compounds include, for example:
bis[4-(3-aminophenoxy)phenyl] methane,
1,1-bis[(4-(3-aminophenoxy)phenyl]ethane,
1,2-bis[4-(3-aminophenoxy)phenyl]ethane,
2,2-bis[4-(3-aminophenoxy)phenyl]propane,
2-[4-(3-aminophenoxy)phenyl]-2-(4-(3-aminophenoxy)-3-methylphenyl] propane,
2,2-bis[4-(3-aminophenoxy)-3-methylphenyl]propane,
2-[4-(3-aminophenoxy)phenyl]-2-[4-(3-aminophenoxy)-3,5-dimethylphenyl]propane,
2,2-bis[4-(3-aminophenoxy)-3,5-dimethylphenyl]propane,
2,2-bis[4-(3-aminophenoxy)phenyl]butane,
2,2-bis[4-(3-aminophenoxy)phenyl]-1,1,1,3,3,3-hexafluoropropane,
4,4'-bis(3-aminophenoxy)biphenyl,
4,4'-bis(3-aminophenoxy)-3-methylbiphenyl,
4,4'-bis(3-aminophenoxy)-3,3'-dimethylbiphenyl,
4,4'-bis(3-aminophenoxy)-3,5-dimethylbiphenyl,
4,4'-bis(3-aminophenoxy)-3,3',5,5'-tetramethylbiphenyl,
4,4'-bis(3-aminophenoxy)-3,3'-dichlorobiphenyl,
4,4'-bis(3-aminophenoxy)-3,5-dichlorobiphenyl,
4,4'-bis(3-aminophenoxy)-3,3',5,5'-tetrachlorobiphenyl,
4,4'-bis(3-aminophenoxy)-3,3'-dibromobiphenyl,
4,4'-bis(3-aminophenoxy)-3,5-dibromobiphenyl,
4,4'-bis(3-aminophenoxy)3,3',5,5'-tetrabromobiphenyl,
bis[4-(3-aminophenoxy)phenyl]ketone,
bis[4-(3-aminophenoxy)phenyl]sulfide,
bis[4-(3-aminophenoxy)-3-methoxyphenyl]sulfide,
[4-(3-aminophenoxy)phenyl][4-(3-aminophenoxy)-3,5-dimethoxyphenyl] sulfide,
bis[4-(3-aminophenoxy)-3,5-dimethoxyphenyl]sulfide,
bis[4-(3-aminophenoxy)phenyl]sulfone,
bis[4-(3-aminophenoxy)phenyl]ether,
bis[4-(4-aminophenoxy)phenyl]ether,
1,4-bis[4-(3-aminophenoxy)phenoxy]benzene,
1,4-bis[4-(4-aminophenoxy)phenoxy]benzene,
1,4-bis[4-(3-aminophenoxy)benzoyl]benzene,
1,3-bis[4-(3-aminophenoxy)benzoyl]benzene,
bis[4-{4-(4-aminophenoxy)phenoxy}phenyl]sulfone,
and bis[4-{4-(4-aminophenoxy)phenoxy}phenyl]ketone. The diaminocompound may be used a single compound or a mixture thereof.

The tetracarboxylic dianhydride which is another raw material for preparing polyimide of the formula ( 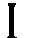 ) is represented by the formula ( 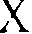 ): 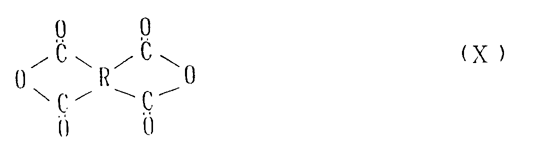 wherein R is the same as above.

In the tetracarboxylic dianhydride represented by the formula ( 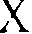 ), R is preferably a tetravalent radical represented by the formula (XI): 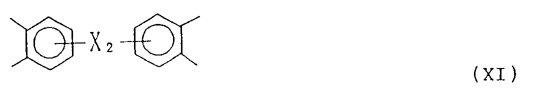 wherein X₂ is a direct bond, -0-, S-, -SO₂, -CH₂, -CO-, -C(CH₃)₂-, 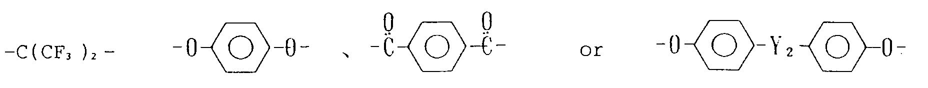 wherein Y₂ is a direct bond, -O-,-S-,-SO₂-,-CH₂-,-CO-, -C(CH₃)₂- or -C(CF₃)₂-.

Consequently, in the polyimide of the formula ( 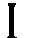 ), R is preferably represented by the formula (XI).

The tetracarboxylic dianhydrides used as a raw material in the preparation of polyimide include, for example,
ethylenetetracarboxylic dianhydride,
butanetetracarboxylic dianhydride,
cyclopentanetetracarboxylic dianhydride,
pyromellitic dianhydride,
3,3',4,4'-benzophenonetetracarboxylic dianhydride,
2,2',3,3'-benzophenonetetracarboxylic dianhydride,
3,3',4,4'-biphenyltetracarboxylic dianhydride,
2,2',3,3'-biphenyltetracarboxylic dianhydride,
2,2-bis(3,4-dicarboxyphenyl)propane dianhydride,
2,2-bis(2,3-dicarboxyphenyl)propane dianhydride,
bis[3,4-dicarboxyphenyl)ether dianhydride,
bis(3,4-dicarboxyphenyl)sulfone, dianhydride,
1,1-bis(2,3-dicarboxyphenyl)ethane dianhydride,
bis(2,3-dicarboxyphenyl)methane dianhydride,
bis(3,4-dicarboxyphenyl)methane dianhydride,
4-[4-(3,4-dicarboxyphenoxy)phenoxy]phthalic dianhydride,
2,3,6,7-naphthalenetetracarboxylic dianhydride,
1,4,5,8-naphthalenetetracarboxylic dianhydride,
1,2,5,6-naphthalenetetracarboxylic dianhydride,
1,2,3,4-benzenetetracarboxylic dianhydride,
3,4,9,10-perylenetetracarboxylic dianhydride,
2,3,6,7-anthracenetetracarboxylic dianhydride,
and 1,2,7,8-phenanthrenetetracarboxylic dianhydride.

The tetracarboxylic dianhydride can be used singly or in combination.

The polyimide used in the composition of the invention is prepared by using the above etherdiamine as a raw material. The polyimide prepared by simultaneous use of other diamines can also be used for the composition of the invention as long as no adverse effect is found on the good properties of the polyimide.

Exemplary diamines which can be simultaneously used include m-phenylenediamine, o-phenylenediamine, p-phenylenediamine, m-aminobenzylamine, p-aminobenzylamine, bis(3-aminophenyl)ether, (3-aminophenyl)(4-aminophenyl)ether, bis(4-aminophenyl)ether, bis(3-aminophenyl)sulfide, (3-aminophenyl)(4-aminophenyl)sulfide, bis(4-aminophenyl)sulfide, bis(3-aminophenyl)sulfoxide, (3-aminophenyl)(4-aminophenyl)sulfoxide, bis(4-aminophenyl)sulfoxide, bis(3-aminophenyl)sulfone, (3-aminophenyl)(4-aminophenyl)sulfone, bis(4-aminophenyl)sulfone, 3,3'-diaminobenzophenone, 3,4'-diaminobenzophenone, 4,4'-diaminobenzophenone, bis[4-(4-aminophenoxy)phenyl]methane, 1,1-bis[4-(4-aminophenoxy)phenyl]ethane, 1,2-bis[4-(4-aminophenoxy)phenyl]ethane, 2,2-bis[4-(4-aminophenoxy)phenyl]propane, 2,2-bis[4-(4-aminophenoxy)phenyl]butane, 2,2-bis[4-(4-aminophenoxy)phenyl]-1,1,1,3,3,3-hexafluoropropane, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 4,4,-bis(4-aminophenoxy)biphenyl, bis[4-(4-aminophenoxy)phenyl]ketone, bis[4-(4-aminophenoxy)phenyl]sulfide, bis[4-(4-aminophenoxy)phenyl]sulfoxide, bis[4-(4-aminophenoxy)phenyl]sulfone, bis[4-(3-aminophenoxy)phenyl]ether, bis[4-(4-aminophenoxy)phenyl]ether, 1,4-bis[4-(4-aminophenoxy)benzyl]benzene, and 1,4-bis[4-(4-aminophenoxy)benzyl]benzene.

The resin composition of the present invention can be obtained by blending the above polyimide resin with the following components.

That is, the component to be blended with the polyimide resin in the composition of the invention is polyether ketone resin, polyester resin or a mixture of these resins.

Polyether ketone resin is a thermoplastic resin having recurring units represented by the above formula ( 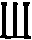 ): 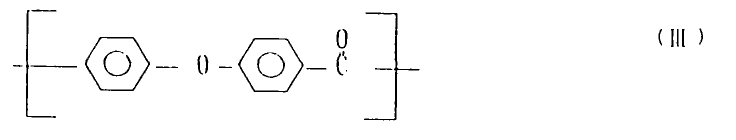 For example, a representative commercial product is VICTREX PEK (Trade Mark of I.C.I. Ltd.).

Polyester resin used in the invention includes the following types of resins.
① A polymer obtained by the reaction of at least one divalent phenol, aliphatic diol and/or alicyclic diol with at least one dicarboxylic acid and/or a dicarboxylic acid derivative.
② A copolymer consisting of at least three components and having a polyester structure as a whole, the copolymer comprising at least one divalent phenol, aliphatic diol and/or alicyclic diol; at least one dicarboxylic acid and/or a dicarboxylic acid derivative; and additionally at least one hydroxycarboxylic and/or a hydroxycarboxylic acid derivative.

The copolymer may contain polyester obtained by reacting at least one hydroxycarboxylic acid and/or its derivative.

Exemplary polyesters include those illustrated below.
1) The polyester resin consisting principally of one or two component polyesters obtained by the reaction of a divalent phenol, aliphatic diol or alicyclic diol with a dicarboxylic acid or dicarboxylic acid derivative, or with a hydroxycarboxylic acid or hydroxycarboxylic acid derivative, and having recurring units represented by the following formulas: 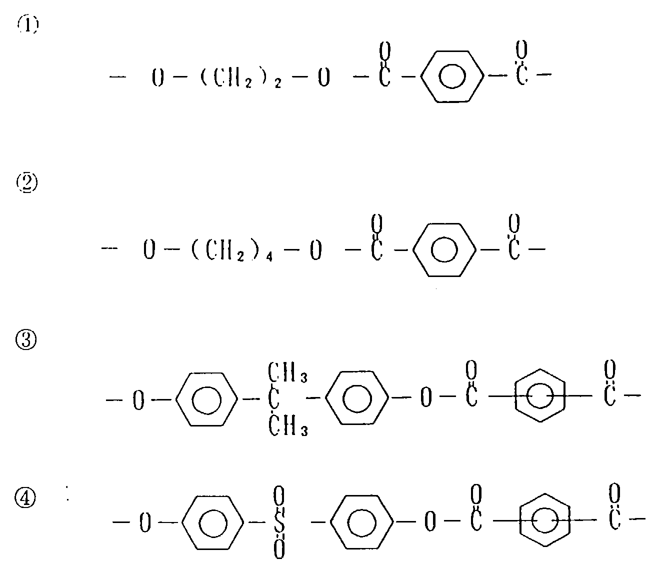 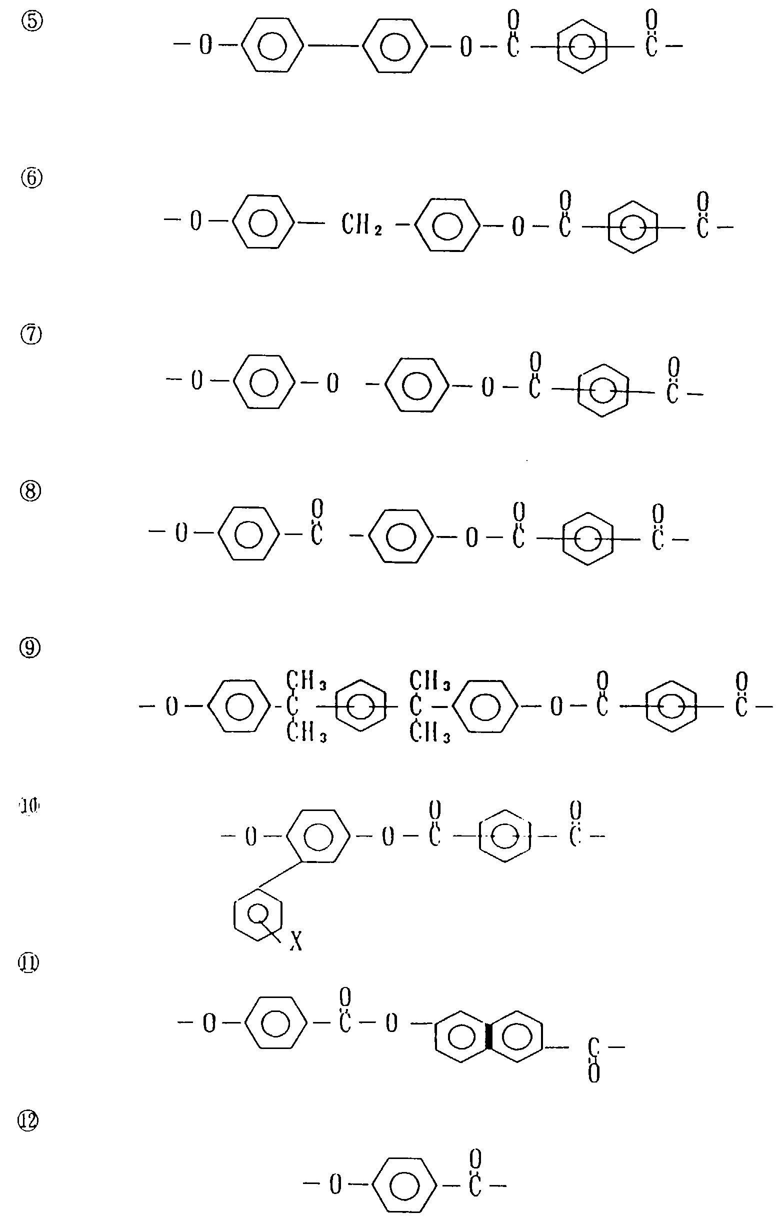 wherein two carbonyl radicals are situated with respect to each other in the ortho, meta or para position or mixture of these positions in the formulas from ③ to 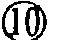 , and X is hydrogen, fluorine, chlorine, bromine or an alkyl radical in the formula 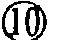 .
2) The copolymer consisting of at least three components, a having polyester structure as a whole, and having a combination of a divalent phenol or diol radical, dicarboxylic acid radical and a hydroxycarboxylic acid radical, the combination being illustrated by the formulas:

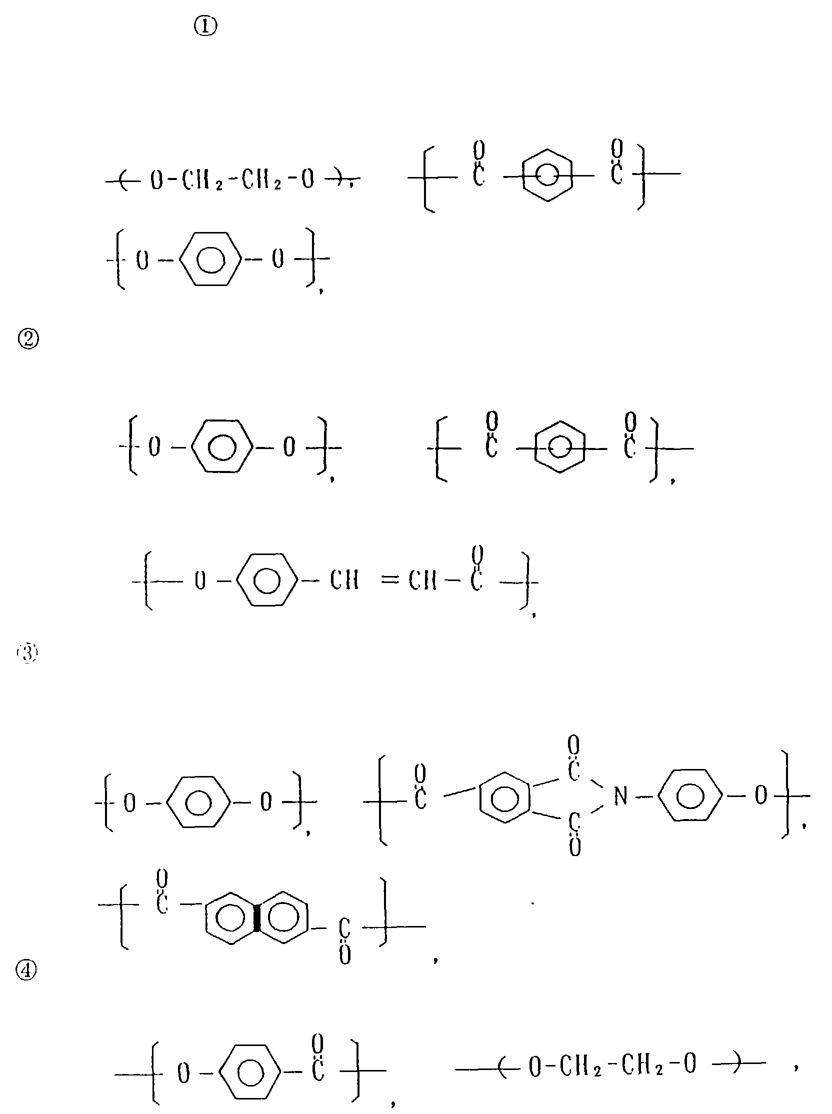

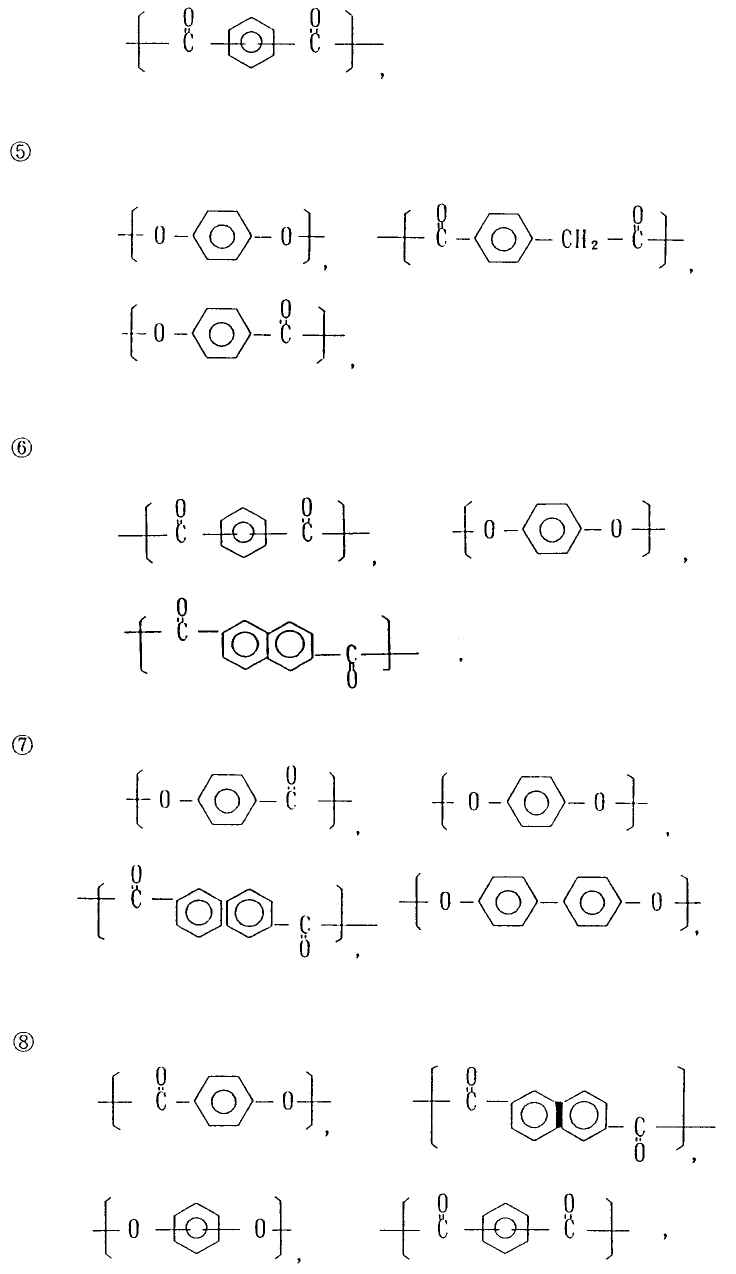

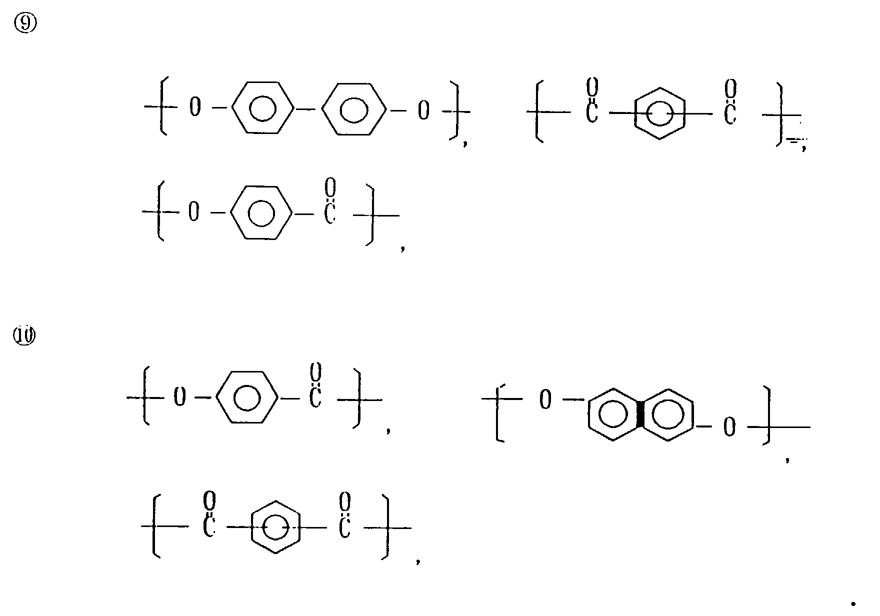

The polyester used for the invention is of course not limited to those illustrated above.

Many kinds of polyesters having various polymerization degrees are commercially available and the polyester having a suitable melt viscosity characteristic for the desired composition can be arbitrarily selected in the market.

The polyester resin has preferably recurring structural units represented by the formula ( 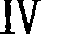 ): 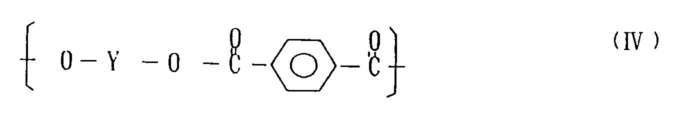 wherein Y is an aliphatic radical having from 1 to 4 carbon atoms or a radical represented by
wherein Z is a direct bond, -C(CH₃)₂-, -SO₂- , -CH₂-, -O-, -CO-, or 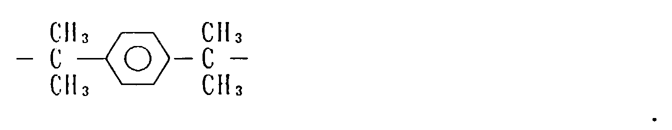 ; the polyester resin can more preferably form an anisotropic molten phase; and the most preferred polyester resin forms the molten phase at a temperature of 420 °C or less.

The polyester which forms such anisotropic molten phase, that is, the polyester which is a so-called thermotropic liquid-crystal polymer is most preferably obtained by carrying out polymerization so that polyester bond is formed by basic structural units of the formulas ( 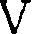 ), ( 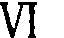 ) and ( 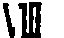 ):

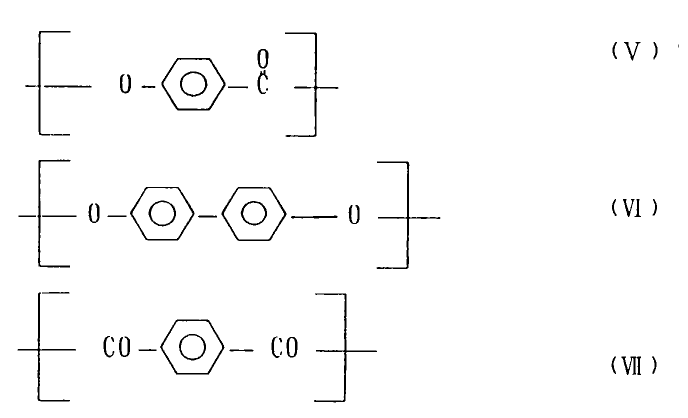

The molding resin composition of the invention is prepared by blending from 99.9 to 50 % by weight of the above polyimide resin and from 0.1 to 50% by weight of the polyether ketone resin and/or the polyester resin.

The resin composition of the invention exhibits remarkable low melt viscosity in a high temperature range of 300 °C or more. The polyester resin provides a good fluidizing effect on the resin composition and the effect can be observed even in a small amount. The lower limit of the polyester resin content in the composition is 0.1 %, preferably 0.5 % by weight.

The composition obtained by using a polyester which does not form an anisotropic molten phase is insufficient in chemical resistance and mechanical strength as compared with the composition obtained by using polyester which forms an anisotropic molten phase. On the other hand, the polyester which forms an anisotropic molten phase can provide excellent performance, that is, chemical resistance, flame retardance and mechanical strength which are superior to those of conventional thermal-resistant resins.

When some kinds of anisotropic molten phase forming polyesters are used in a large amount, it is liable to cause problems such as too high anisotropy of mechanical properties, formation of fibrils, and insufficient weld strength. Thus the polyester resin is controlled to a smaller amount in the composition. Usually the preferred amount of the polyester resin is 50 % by weight or less.

The composition of the invention can be prepared by generally known processes. For example, preferred processes are illustrated below.
① A process for preparing powder by preblending polyimide resin powder and polyester ketone resin powder and/or polyester resin powder in a mortar, Henshel mixer, drum blender, tumbler, ball mill and ribbon blender.
② A process for preparing powder by previously dissolving or suspending polyimide resin powder in an organic solvent, adding polyether ketone resin and/or polyester resin to the resulting solution or suspension, dispersing uniformly and thereafter removing the solvent.
③ A process for preparing powder by suspending polyether ketone resin and/or polyester resin in an organic solvent solution of polyamic acid which is the precursor of polyimide in the invention, carrying out heat-treatment at 100 to 400 °C or chemical imidization by using of a common imidizing agent, and then removing the solvent.

The powdery polyimide resin composition thus obtained can be used as such for various molding processes, for example, injection molding, compression molding and transfer molding. However, molding is more preferably carried out after melting and mixing each component of the composition.

In the preparation of a melt-mixed composition, it is also a simple and effective method to mix and mold powders with each other, pellets with each other, or powder and pellets.

Melt-mixing can be conducted by utilizing equipment for melt-blending common rubber or plastics, for example, hot rolls, Banbury mixer, Brabander and an extruder.

Melt-mixing is carried out in the range of from the melt temperature to the decomposition-initiating temperature of the formulation. The temperature is usually from 250 to 420 °C, preferably from 300 to 400 °C.

As to the process for molding the resin composition of the invention, suitable process is injection molding or extruding which is a process capable of forming a uniformly melted blend and which has a high productivity. Other molding processes such as transfer molding, compression molding and sinter molding can also be applied without any problem.

In the present invention, one or more additives can be added to the composition, if desired.

Exemplary additives which can be used include, fillers such as calcium carbonate, mica, glass beads, graphite, and molybdenum disulfide; fiber reinforcements such as glass fibers, carbon fibers, ceramic fibers, aramide fibers, potassium titanate fibers and metal fibers; lubricants; release agents; stabilizers; colorants; other thermoplastic resin such as polyphenylene sulfide, polyether imide, polyether sulfone, and polyether ether ketone; and thermosetting resins such as phenol resin, epoxy resin, silicone resin and polyamide imide resin.

The present invention will hereinafter be illustrated further in detail by way of examples and comparative examples.

In the examples and comparative examples, physical properties were determined by the following methods.
○Inherent viscosity:
   0.5 g of polyimide powder was dissolved in 100 *mℓ* of a solvent mixture consisted of p-chlorophenol/phenol in a ratio of 9/1 by weight. Measurement was conducted after cooling the solution to 35 °C
○Tensile strength :
   Measured in accordance with ASTM D-638 by using a tensile test specimen without a weld and a tensile test specimen welded at the center of the parallel portion.
○Elongation at break :
   Measured in accordance with ASTM D-638.
○Izod impact strength :
   Measured in accordance with ASTM D-258.
○Heat distortion temperature (HDT):
   Measured in accordance with ASTM D-648.
○Melt Flow Ratio (MFR):
   Measurement was conducted at 400 °C, under 1.05 kg load in accordance with JIS K-7210.
○Spiral flow length:
   Measurement was conducted at a cylinder temperature of 400 °C, mold temperature of 180 °C, injection pressure of 1000 kg/cm² and cavity thickness of 1 mm.
○Heat shrinkage :
   Heat treatment was carried out under below described conditions on a tensile test specimen in accordance with ASTM D-638. Dimensional change in the longer direction of the specimen was measured before and after the heat treatment. Heat treatment carried out in three heating steps, 150 °C × 20 hrs → 260 °C × 20 hrs → 300 °C × 2 hrs.
○Wrapage:
   Injection molded plate (75 × 100 × 2 mm) is heated and change of warpage height in longer direction was measured between before and after treatment.
○Peak temperature (Tc) of crystallization exotherm :
   Peak temperature (Tc₁) of crystallization exotherm under a temperature-rise rate of 10 °C/min from the room temperature and peak temperature (Tc₂) of crystallization exotherm under a temperature-fall rate of 10 °C/min from 400 °C were measured by using a differential scanning calorimeter.
○Coefficient of linear thermal expansion :
   Coefficient of linear thermal expansion from 25 to 200 °C was measured with a thermal expansion tester by using unwelded tensile specimens of flow direction (MD) and transverse direction (TD).
○The ratio TD/MD of the linear expansion coefficient was assumed as being anisotropic

### Examples 1 - 4

Polyimide powder having an inherent viscosity of 0.90 *dℓ*/g and a glass transition temperature of 235 °C was prepared from bis [4-(3-aminophenoxy)phenyl]sulfide and pyromellitic dianhydride.

The above polyimide powder was dry blended with pellets of aromatic polyester, U-polymer U-100(Trade Mark of Unitika Co. Ltd.) in various compositions as illustrated in Table 1. The mixture obtained was melt kneaded at 340 to 360 °C with an extruder having a diameter of 40 mm and a screw of 3.0 in compression ratio, and extruded to cut into uniformly blended pellets.

The pellets obtained above was injection molded at a cylinder temperature of 370 °C and a mold temperature of 150 °C by using a common injection molding machine. Physical and thermal properties of molded specimens were measured. Results are illustrated in Table 1.

### Comparative Examples 1 and 2.

The same procedures as described in Examples 1 - 4 were carried out by using the compositions which were outside of the scope of the invention. Physical and thermal properties of the molded specimens were measured. Results are illustrated in Table 1.

### Examples 5 - 7

Polyimide powder having an inherent viscosity of 0.50 *dℓ*/g, glass transition temperature of 257 °C and a melting point of 387 °C were prepared from 4,4'-bis(3-aminophenoxy)biphenyl and pyromellitic dianhydride.

The above polyimide powder was dry blended with an aromatic polyester XYDAR SRT-500 (Trade Mark of DARTCO Co. Ltd.) which forms an anisotropic molten phase at a temperature of 420°C or less, in various compositions as illustrated in Table 1. The mixtures obtained were melt-kneaded at 400 to 420 °C to obtain uniform pellets by carrying out the same procedures as described in Examples 1 - 4.

The pellets obtained were injection molded at a cylinder temperature of 400 to 420 °C and a mold temperature of 200 °C. Physical and thermal properties of the molded specimens were tested and results are illustrated in Table 1.

### Comparative Examples 3 and 4

The same procedures as described in Examples 5 - 7 were carried out by using the compositions which were outside of the scope of the invention. Physical and thermal properties of the molded specimens were measured. Results are illustrated in Table 1.

### Examples 6 - 10 and Comparative Examples 5 and 6

Polyimide powder having an inherent viscosity of 0.45 *dℓ*/g was prepared from 4,4'-bis(3-aminophenoxy)biphenyl and pyromellitic dianhydride. The polyimide powder was dry blended with aromatic polyether ketone VICTREX PEK 220P (Trade Mark of I.C.I. Ltd.) in compositions as illustrated in Table 2. The mixtures obtained were melt-kneaded with a twin screw extruder 30 mm in diameter at a cylinder temperature of 380 to 410°C and extruded and cut into uniform pellets.

MFR of the pellets was measured and results are illustrated in Table 2.

The pellets were injection molded to obtain specimens having dimensions of 6 mm × 70 mm × 3 mm. HDT was measured on these specimens and results are illustrated in Table 2.

### Example 11 and Comparative Examples 7 and 8

Polyimide powder having an inherent viscosity of 0.46 *dℓ*/g was prepared from bis[4-(3-aminophenoxy)phenyl]sulfide and pyromellitic dianhydride. The polyimide powder obtained was dry blended with aromatic polyether ketone VICTREX PEK 220P (Trade Mark of I.C.I. Ltd.) in the compositions as illustrated in Table 2. The mixtures obtained were evaluated by the same procedures as carried out in Example 8. Results are illustrated in Table 2.

### Example 12 and Comparative Examples 9 and 10

Polyimide powder having an inherent viscosity of 0.45 *dℓ*/g was prepared from 2,2-bis[4-(3-aminophenoxy)phenyl]propane and 3,3',4,4'-benzophenonetetracarboxylic dianhydride.

The polyimide powder obtained was dry blended with aromatic polyether ketone VICTREX PEK 220P(Trade Mark of I.C.I. Ltd.) in compositions as illustrated in Table 2. The mixtures obtained were evaluated by the same procedures as carried out in Example 8. Results are illustrated in Table 2.

### Examples 13 - 17 and Comparative Examples 11 and 12

Polyimide having an inherent viscosity of 0.45 *dℓ*/g prepared from 4,4-bis(3-aminophenoxy)biphenyl and pyromellitic dianhydride. The polyimide obtained was dry blended with a thermotropic liquid-crystal polymer Xydar SRT-50 (Trade Mark of DARTCO CO. Ltd.) in compositions as illustrated in Table 3. The mixtures thus obtained were melt-kneaded in an extruder at a cylinder temperature of 400 °C and extruded and cut into pellets.

The pellets were injection molded at a cylinder temperature of 380 to 410 °C, mold temperature of 190 °C and injection pressure of 500 kg/cm² to obtain tensile test specimens. Tensile test specimens having a weld at the center of the parallel portion were also injection molded under the same conditions. Results of tensile strength test are illustrated in Table 3.

Spiral flow length was measured at a cylinder temperature of 400 °C, mold temperature of 180 °C, injection pressure of 1000 kg/cm² and cavity thickness of 1 mm. Results are illustrated in Table 3.

Heat shrinkage, coefficient of linear expansion and peak temperature (Tc) of crystallization exotherm were measured by using injection molded tensile specimens without a weld. Results are illustrated in Table 3. The ratio TD/MD of the coefficient of linear thermal expansion was assumed as being anisotropic and are also illustrated in Table 3.

### Example 18

The same procedures as described in Example 14 were carried out except that ECONOL E-6000 (Trade Mark of Sumitomo Chemical Co. Ltd.) was used as a thermotropic liquid-crystal polymer. Results are illustrated in Table 3.

### Example 19

The same procedures as described in Example 16 were carried out except that ECONOL E-6000 (Trade Mark of Sumitomo Chemical Co. Ltd.) was used as a thermotropic liquid-crystal polymer.

### Comparative Example 13

The same procedures as described in Comparative Example 12 were carried out except that ECONOL E-6000 (Trade Mark of Sumitomo Chemical Co. Ltd.) was used as a thermotropic liquid-crystal polymer. Results are illustrated in Table 3.

### Example 20

The same procedures as described in Example 15 were carried out except that polyimide prepared from bis[4-(3-aminophenoxy)phenyl]sulfide and pyromellitic dianhydride and having an inherent viscosity of 0.46 *dℓ*/g was used. Results are illustrated in Table 3.

### Comparative Example 14

The same procedures as described in Comparative Example 11 were carried out except that polyimide prepared from bis[4-(3-aminophenoxy)phenyl]sulfide and pyromellitic dianhydride and having an inherent viscosity of 0.46 *dℓ*/g was used. Results are illustrated in Table 3.

### Comparative Example 15

The same procedures as described in Comparative Example 12 were carried out except that polyimide prepared from bis[4-(3-aminophenoxy)phenyl]sulfide and pyromellitic dianhydride and having an inherent viscosity of 0.46 *dℓ*/g was used. Results are illustrated in Table 3.

### Example 21

The same procedures as described in Example 15 were carried out except that polyimide prepared from 2,2-bis[4-(3-aminophenoxy)phenyl]propane and 3,3',4,4'-benzophenonetetracarboxylic dianhydride and having an inherent viscosity of 0.45 *dℓ*/g was used. Results are illustrated in Table 3.

### Comparative Example 16

The same procedures as described in Comparative Example 11 were carried out except that polyimide prepared from 2,2-bis[4-(3-aminophenoxy)phenyl]propane and 3,3',4,4'-benzophenonetetracarboxylic dianhydride and having an inherent viscosity of 0.45 *dℓ*/g was used. Results are illustrated in Table 3.

### Comparative Example 17

The same procedures as described in Comparative Example 12 were carried out except that polyimide prepared from 2,2-bis[4-(3-aminophenoxy)phenyl]propane and 3,3',4,4'-benzophenonetetracarboxylic dianhydride and having an inherent viscosity of 0.45 *dℓ*/g was used. Results are illustrated in Table 3.

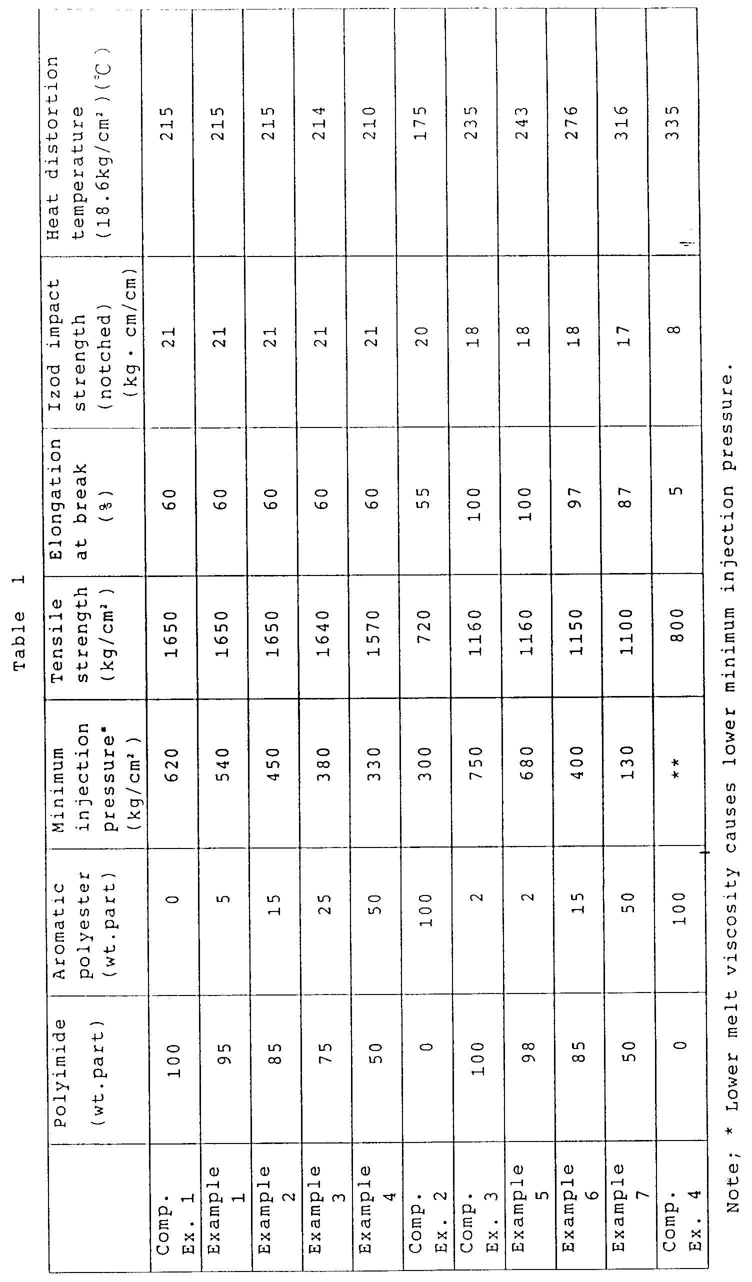

**Table 2**

| | Composition | | MFR (g/10 min) | spiral flow length (mm) | Heat shrinkage (%) | Warpage * (%) | HDT (°C) |
|---|---|---|---|---|---|---|---|
| | Polyimide (wt.%) | PEK (wt.%) | | | | | |
| Example 8 | 90 | 10 | 9 | 65 | 6 | 22 | 225 |
| Example 9 | 75 | 25 | 11 | 80 | 4 | 15 | 210 |
| Example 10 | 60 | 40 | 14 | 105 | 2 | 10 | 200 |
| Comp. Ex. 5 | 100 | 0 | 7 | 50 | 12 | 88 | 238 |
| Comp. Ex. 6 | 40 | 60 | 18 | 140 | 2 | 4 | 175 |
| Example 11 | 75 | 25 | 10 | 70 | 4 | 20 | 208 |
| Comp. Ex. 7 | 100 | 0 | 5 | 30 | 14 | 96 | 232 |
| Comp. Ex. 8 | 40 | 60 | 16 | 120 | 3 | 6 | 170 |
| Example 12 | 75 | 25 | 10 | 65 | 4 | 18 | 210 |
| Comp. Ex. 9 | 100 | 0 | 7 | 45 | 13 | 90 | 234 |
| Comp. Ex. 9 | 40 | 60 | 19 | 140 | 2 | 5 | 171 |

| | | | | | | | |
|---|---|---|---|---|---|---|---|
| Note; * Injection molded plate (75 × 100 × 2 mm) is heat treated and change of warpage height in longer direction was measured between before and after treatment. | | | | | | | |

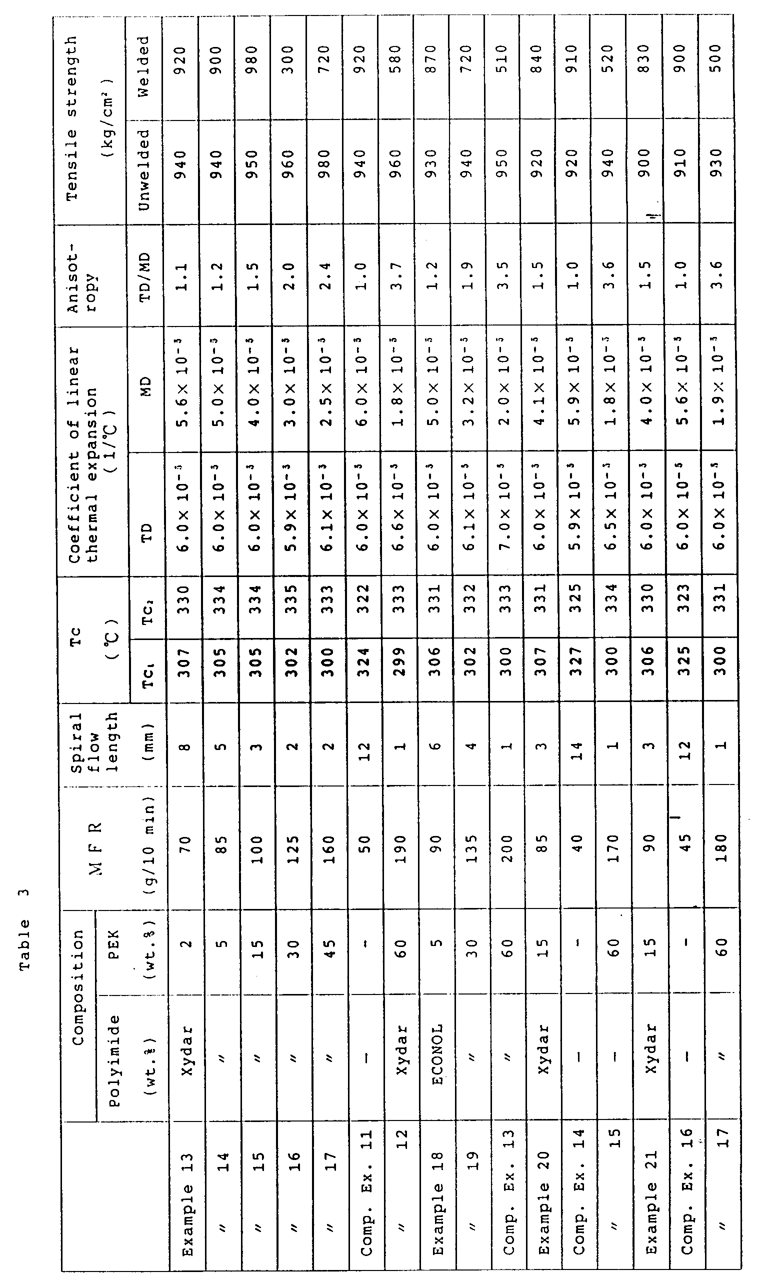

## Claims

1. A resin composition comprising from 99.9 to 50 % by weight of a polyimide having recurring units represented by the formula: 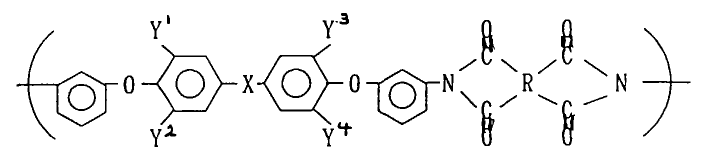
in which X is a direct bond, divalent hydrocarbon having from 1 to 10 carbon atoms, hexafluorinated isopropylidene, carbonyl, thio or sulphonyl, Y¹, Y², Y³ and Y⁴ are individually hydrogen, methyl, methoxy, chlorine or bromine, R is an aliphatic radical having 2 or more carbon atoms, an alicyclic radical, a monocyclic aromatic radical, a fused polycyclic aromatic radical, or a polycyclic aromatic radical represented by the formula: 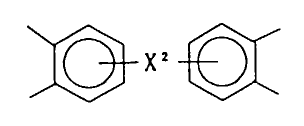
X² is a direct bond, -O-, -S-, -SO₂-, -CH₂-, -CO-, -C(CH₃)₂-, -C(CF₃)₂-, 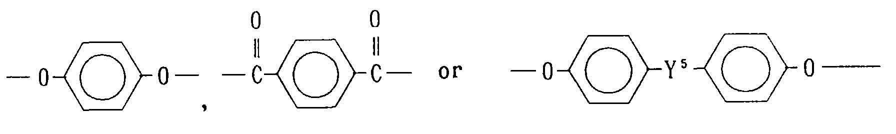
and Y⁵ is a direct bond, -O-, -S-, -SO₂-, -CH₂-, -CO-, -C(CH₃)₂- or -C(CF₃)₂-,
and from 0.1 to 50 % by weight of one or more polyester resins having recurring units selected from the following: 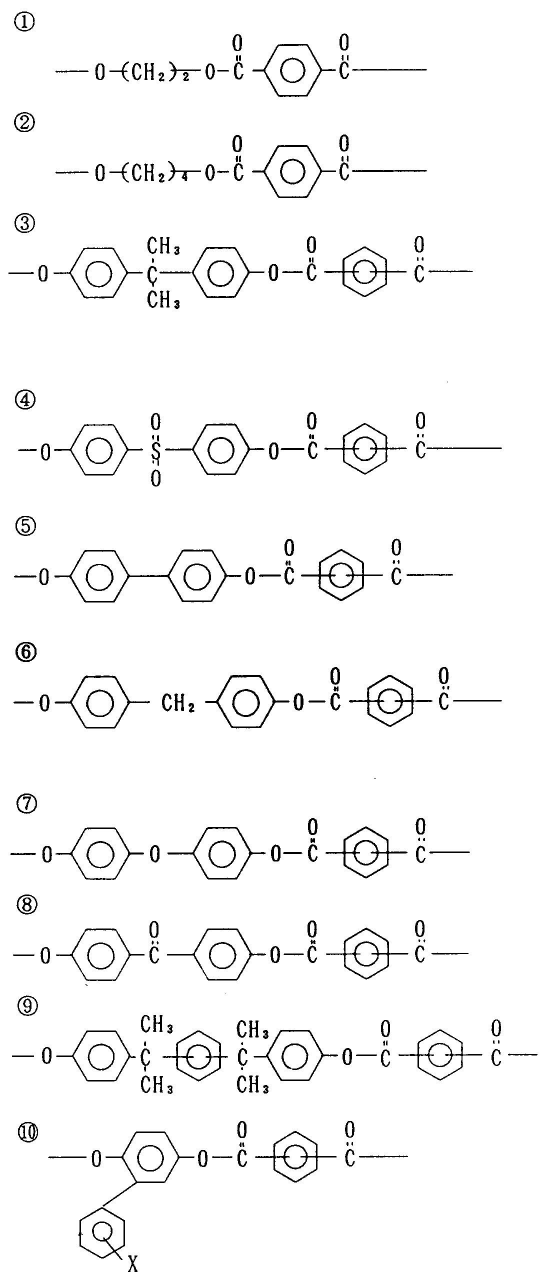 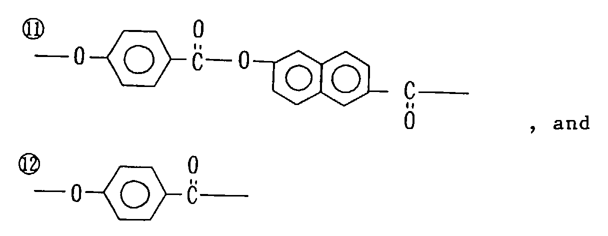
in which two carbonyl radicals are situated with respect to each other in the ortho, meta or para position or mixture of these positions in the formulas 3 to 10, and X is hydrogen, fluorine, chlorine, bromine or an alkyl radical in formula 10,
or a polyester resin which is a copolymer consisting of three or four components, having a polyester structure as a whole, and having a combination of a divalent phenol or diol radical, dicarboxylic acid radical and a hydroxycaroxylic acid radical selected from the combination of the formulas:

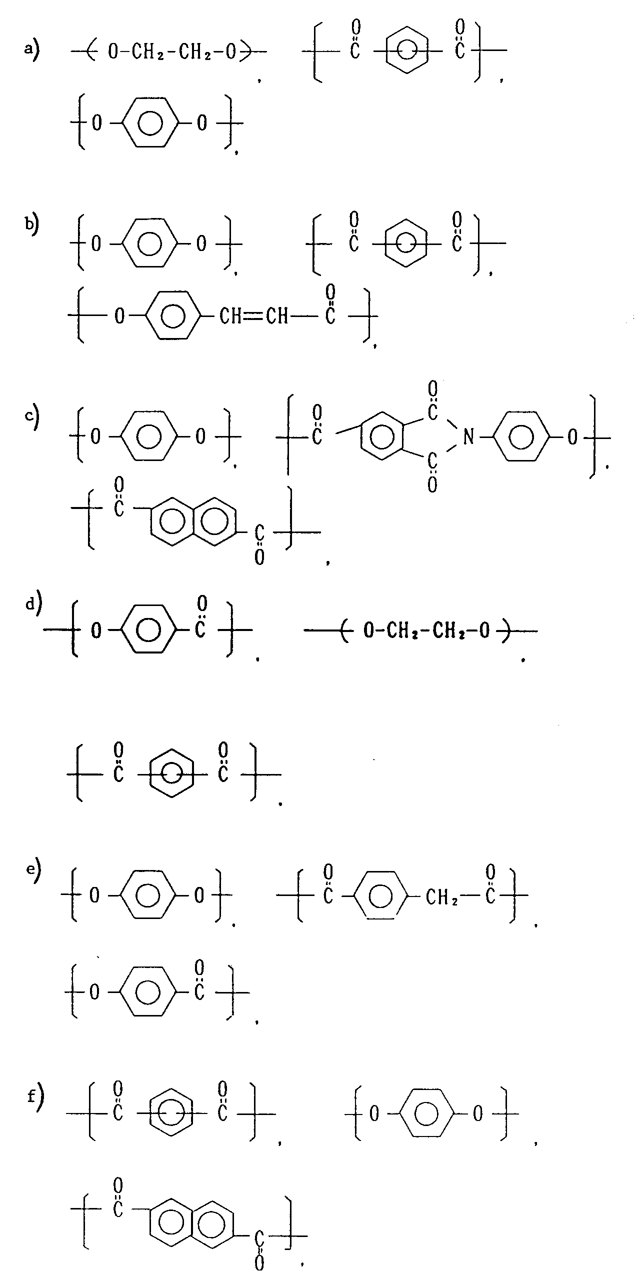

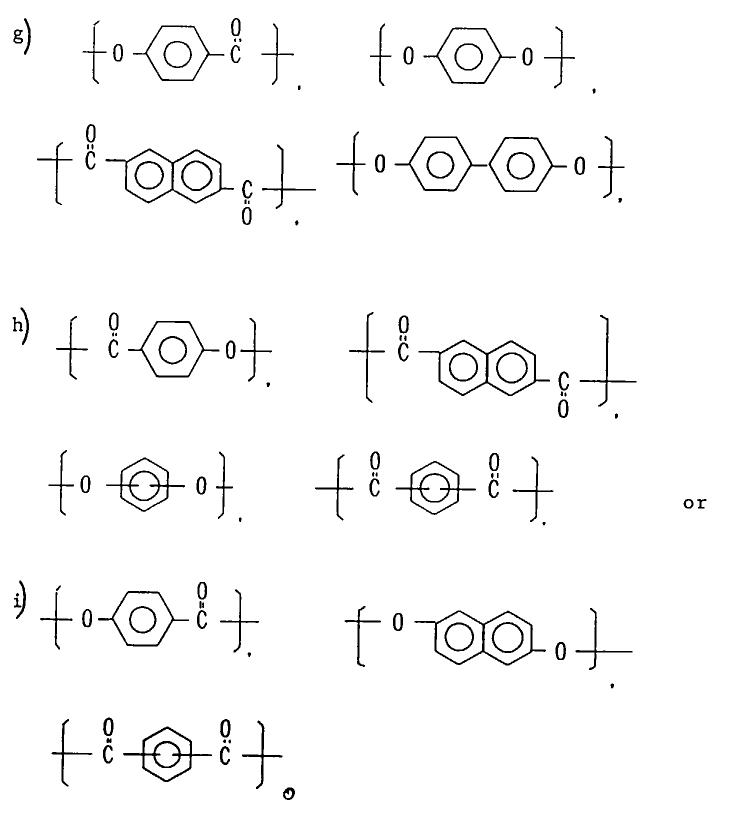

2. A resin composition as claimed in Claim 1 in which the polyimide is represented by the formula: 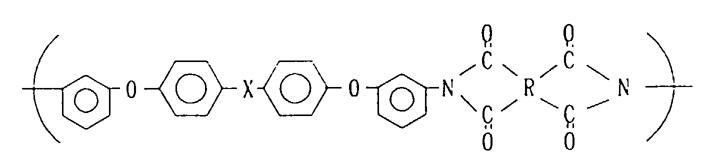 in which X and R are as defined in Claim 1.
